# EUROPEAN PATENT SPECIFICATION

(11) **EP 0 704 478 B1**
(45) Date of publication and mention of the grant of the patent: **31.03.1999**
(21) Application number: 95115140.6
(22) Date of filing: 26.09.1995
(51) Int. Cl.: C08K 13/00

(54) **Flame-retardant polyester-type resin composition**
Flammverzögernde Harzmasse vom Polyestertyp
Composition de résine ignifugée de type polyester

(30) Priority: 27.09.1994 JP 258687/94
(43) Date of publication of application: 03.04.1996
(73) Proprietor: KANEGAFUCHI KAGAKU KOGYO KABUSHIKI KAISHA, Kita-ku, Osaka-shi, Osaka 530 (JP)
(72) Inventor: Nakaura, Misuzu, Hirakata-shi, Osaka (JP); Nakano, Kimihiko, Kobe-shi, Hyogo (JP)
(74) Representative: VOSSIUS & PARTNER

(56) References cited:
- DATABASE WPI Derwent Publications Ltd., London, GB; AN 94-062143 & JP-A-06 016 912 (EASTMAN KODAK CO, TORAY IND INC) , 25 January 1994

## Description

This invention relates to a polyester-type resin composition which has excellent moldability in a low-temperature metal mold, excellent low warpage property and markedly improved flame-retardance. More particularly, the present invention relates to a resin composition having a high flame-retardant level with markedly shortened glowing time of the resin without adversely affecting an inherent low warpage property which can be obtained by formulating specific amounts of a flame-retardant and a flame-retardant aid, as well as calcium carbonate and mica and/or talc, further by maintaining the molar ratio of bromine atoms in a bromine-type flame-retardant and of antimony atoms in an antimony-type flame-retardant aid at a constant value, and furthermore by adding mica having a specific average flake diameter to the composition.

Polyester-type resins are widely used as fibers, films and molded articles since they have thermal resistance, chemical resistance, light resistance as well as excellent electrical and physical characteristics. In particular, when the resins are used as molded articles, fibrous reinforcing inorganic fillers such as glass fibers are generally added thereto in order to improve their mechanical strength and heat distortion temperature. However, the resin compositions containing a large amount of such fibrous reinforcing agent have defects in that poor molding such as warpage, dishing and distortion are generated particularly in the molded articles having plate-like, box-like and rod-like shapes.

In order to improve the above problems, the use of amorphous or non-fibrous fillers such as talc, mica, calcium carbonate and the like is known (Japanese Patent Publication Nos. Hei-1-59300 and Hei-5-25903). However, of these amorphous fillers, particularly when a large amount of calcium carbonate is added to the resin, a problem occurs in that the glowing time during the burning test is prolonged. When the amount of a flame-retardant in the resin is increased for the purpose of shortening the glowing time, it adversely affects remarkably dripping during burning. Further, when a substance having a thickening effect is added to the resin in order to suppress dripping, the glowing time is again prolonged, though dripping is suppressed, and a high flame-retardance level can not be obtained.

It is an object of the present invention to provide a flame-retardant polyester-type resin composition having good warpage properties and markedly improved flame-retardance.

This object could be achieved on the basis of the finding that a resin composition having a high flame-retardant level with markedly shortened glowing time of the resin without adversely affecting an inherent low warpage property can be obtained by formulating specific amounts of a flame-retardant and a flame-retardant aid, as well as calcium carbonate and mica and/or talc, further by maintaining the molar ratio of bromine atoms in a bromine-type flame-retardant and of antimony atoms in an antimony-type flame-retardant aid at a constant value, and furthermore by adding mica having a specific average flake diameter to the composition.

That is, the present invention provides a flame-retardant polyester-type resin composition comprising from 20 to 85 wt% of a polyester-type resin (A), from 0 to 20 wt% of a non-crystalline resin (B) which is incompatible with the polyester-type resin (A), from 1 to 30 wt% of an organic bromine-type compound (C), from 0.1 to 10 wt% of an antimony compound (D), from 3 to 40 wt% of a reinforcing fiber (E), from 1 to 40 wt% of calcium carbonate (F), and from 1 to 20 wt% of an inorganic filler comprising mica and/or talc (G).

The polyester-type resin (A) used in the present invention is obtained from a dicarboxylic acid component comprising at least 80 mol% of terephthalic acid and a diol component comprising at least 80 mol% of a substance such as ethylene glycol, propane-1,3-diol, butane-1,4-diol, pentane-1,5-diol, hexane-1,6-diol, cyclohexane-1,4-dimethanol and a polyalkylene glycol by direct esterification or ester exchange, followed by polycondensation.

In particular, a composition comprising from 1 to 20 wt% of a block copolymer of the following general formula (I) and from 99 to 80 wt% of polyethylene terephthalate is preferred, 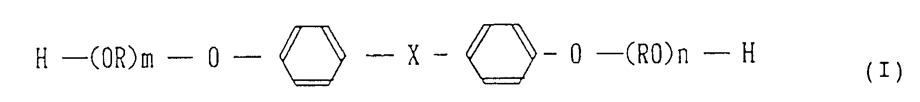 wherein X represents a -C(CH₃)₂- group, a -SO₂- group, a -CO-group or a -O- group, R represents an alkylene group having 3 carbon atoms or less, and n and m each is an integer of from 5 to 15.

The non-crystalline resin (B) which is incompatible with the polyester-type resin (A) used in the present invention is at least one resin selected from a polystyrene, a polycarbonate, a polyphenylene oxide, an AS (acrylonitrile-styrene) resin, an ABS (acrylonitrile-butadiene-styrene) resin, an AAS (acrylonitrile-acrylic rubber-styrene) resin, an AES (acrylonitrile-ethylenepropylene rubber-styrene) resin, a methacrylic resin and a phenylmaleimide resin, and is used in an amount of from 0 to 20 wt%, preferably from 5 to 10 wt%, in the polyester-type resin composition. The low warpage properties of the composition, in particular, the warpage properties after an annealing treatment can be remarkably improved as the formulating amount of the non-crystalline resin (B) increases. However, since the glowing of the composition deteriorates in the burning test, the non-crystalline resin (B) is used in the above-described range.

The organic bromine-type compound (C) used in the present invention can be a bromine-type flame-retardant generally used. Particularly preferred examples of the compound include a brominated polystyrene compound having a repeating structure represented by the following general formula (II): 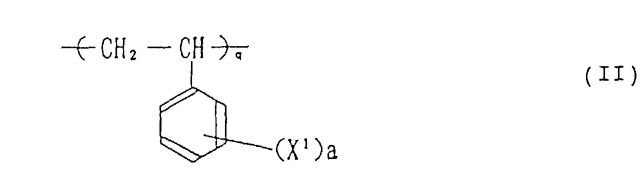 wherein X¹ is a halogen atom, a is an integer of from 1 to 5, and q is an integer, for example, polydibromostyrene, polytribromostyrene and polypentabromostyrene, or a brominated bisphenol-type epoxy resin represented by the following general formula (III): 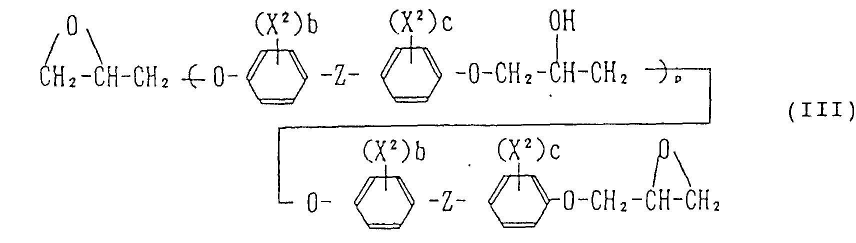 wherein X² represents a halogen atom, b and c each is an integer of from 1 to 4, p is an integer, and z represents a lower alkyl group, a halogenated lower alkyl group, an alkylidene group, -SO₂-, -SO-, -S-, -O-, -CO- or a direct bond, for example, a condensate of a dibromide or tetrabromide of bisphenol A, bisphenol S or bisphenol F, with epichlorohydrin. These compounds can be used alone or in a combination of two or more compounds.

Examples of the antimony compound (D) used as a flameretardant aid include antimony trioxide, antimony tetraoxide, antimony pentaoxide or a metal salt thereof. These compounds can be used alone or in combination of two or more compounds, but, from the standpoint of the flame-retarding effect, antimony trioxide, sodium antimonate or a mixture thereof is preferred.

In incorporating these flame-retardants and flame-retardant aids, the amount of the organic bromine-type compound (C) to be added is 1 wt% or more, preferably 8 wt% or more and 30 wt% or less, preferably 12 wt% or less. In an amount below 1 wt%, burning time is prolonged, and, in an amount exceeding 30wt%, mechanical strength of the resin decreases. Also, the amount of the antimony compound (D) in the polyester-type resin composition is 0.1 wt% or more, preferably 1.0 wt% or more and 10 wt% or less, preferably 5 wt% or less. In an amount below 0.1 wt%, burning time is prolonged, and, in an amount exceeding 10 wt%, glowing time is prolonged and also mechanical strength of the resin decreases.

Further, the molar ratio (Br/Sb) of bromine atoms in the bromine-type flame-retardant and of antimony atoms in the antimony-type flame-retardant aid is adjusted to preferably 1/1 or more, more preferably 10/1 or more and preferably 50/1 or less, more preferably 30/1 or less. When Br/Sb is in the range lower than 1/1, glowing time of the resin is prolonged, and, also, even at a ratio of 50/1 or more, additional shortening effect on the glowing time of the resin is not observed and, conversely, dripping of the resin during burning rather deteriorates.

The reinforcing fibers (E) used in the present invention include glass fibers, mineral fibers, carbon fibers, silicon carbide fibers, boron carbide fibers, potassium titanate fibers, and gypsum fibers. These fibers can be used alone or in a combination of two or more fibers, but, in particular, glass fibers are preferred. In order to improve mechanical strength and thermal deformation temperature, the reinforcing fibers (E) are incorporated at a high proportion, but, the amount of warpage of the resulting molded article deteriorates as the proportion of the reinforcing fibers to be incorporated increases. From such a standpoint, in order to maintain low warpage properties and yet good mechanical strength, the proportion of the reinforcing fiber (E) in the polyester-type resin composition is 3 wt% or more, preferably 10 wt% or more, and 40 wt% or less, preferably 20 wt% or less. Further, the proportion of reinforcing fibers (E) and calcium carbonate (F) to be incorporated is desirably adjusted to from 5/3 to 1/1 by weight. When the proportion is more than 5/3, the amount of warpage is increased, and, when it is less than 1/1, mechanical strength is decreased.

Calcium carbonate (F) used in the present invention is preferably an amorphous compound having an average particle diameter of from 0.5 to 4.0 µm, and either a surface treated product or an untreated product can be used. The larger the particle diameter used, the shorter the glowing time, but mechanical strength thereof is decreased. The proportion of calcium carbonate to be incorporated in the polyester-type resin composition is 1 wt% or more, preferably 5 wt% or more, and 40 wt% or less, preferably 30 wt% or less. At a proportion below 1 wt%, the amount of warpage is increased, and at a proportion exceeding 40 wt%, mechanical strength is decreased.

Mica used as an inorganic filler (G) in the present invention is preferably that of a plate-like form having preferably a weight average flake diameter (a value determined by averaging the weight distribution of flake diameters) of from 10 to 350 µm, more preferably from 10 to 40 µm, and an aspect ratio of from 20 to 80. At an average flake diameter below 10 µm, no high flame-retardance tends to be obtained since glowing time is not significantly shortened. With the average flake diameter exceeding 350 µm, insufficient dispersion of mica occurs during extrusion processing, and mechanical strength of the extruded product tends to be decreased. Talc is not especially restricted, and a known product thereof can be used. The amount of the inorganic filler (G) to be incorporated in the polyester-type resin composition is 1 wt% or more, preferably 3 wt% or more, and 20 wt% or less, preferably 8 wt% or less. At a proportion below 1 wt%, a sufficient effect on the shortening of the glowing time cannot be obtained, and, on the other hand, at a proportion exceeding 20 wt%, additional improving effect cannot be observed. The proportion of mica and talc is not especially restricted.

In the flame-retardant polyester-type resin composition according to the present invention, one or more kinds of additives such as organic crystallizing nucleating agents, antioxidants, ultraviolet absorbing agents, plasticizers, releasing agents and coloring material may be incorporated. Further, in the composition according to the present invention, other polymers may be blended in the range which does not adversely affect the effect of the composition.

The present invention is further illustrated with reference to the following examples, but the present invention is not limited by these examples.

### EXAMPLE 1

43 wt% of a polyethylene terephthalate resin (A1) having an intrinsic viscosity of 0.65 measured at 25°C (in a 1:1 (weight ratio) mixed solution of phenol and 1,1,2,2-tetrachloroethane), 5 wt% of a polystyrene resin (Estyrene G-13, a product of Nippon Steel Chemical Co., Ltd.), 11 wt% of a brominated bisphenol type epoxy resin (Phenototo YPB-43M, a product of Toto Kasei Co., Ltd.), 1 wt% antimony trioxide (Br/Sb = 10/1), 19 wt% of a ground calcium carbonate having an average particle diameter of 1.6 µm and 5 wt% of mica having a weight average flake diameter of 20 µm and an aspect ratio of 20 were mixed by a super floater, and the mixture was melt-kneaded using a 40 mm twin screw extruder equipped with a vent to obtain a resin composition in a pellet form. In this process, glass fibers (GF)(T-195H, a product of Nippon Electric Glass Co., Ltd.) were added in an amount of 16 wt% based on the total amount of the composition at an intermediate position of the twin screw extruder.

Then, after drying the resulting pellet-like resin at 140°C for 4 hours, test pieces for a burning test (a thickness of 1/32" and a thickness of 1/16"; a metal mold temperature = 60°C) were molded using an injection molding machine (a product of The Japan Steel Works, Ltd., J35SSII). In the same manner, plate test pieces (120 mm x 120 mm x 2 mm; a metal mold temperature = 70°C) were molded using an injection molding machine (a product of Toshiba Machine Co., Ltd., IS-75E).

The evaluation of flame-retardance was conducted based on the UL94 vertical flame test method, and, of the five test pieces, the number of test pieces showing dripping and the glowing time were measured. As an index of a glowing improvement effect, an average value of the glowing time was determined with respect to the test pieces showing no dripping of the five test pieces.

The evaluation of the warpage properties was performed by putting a test piece on a flat table and measuring the hight of it from the table after the molded plate test pieces had been conditioned at 23°C and 50% RH for 48 hours or longer (the amount of warpage at the molding). Then, the test pieces were subjected to an annealing treatment in an oven at 90°C for 2 hours and, after allowing to cool to room temperature, the test pieces were again conditioned as above, and the degree of warpage was again measured (the amount of warpage after annealing). The results obtained are shown in Table 1 below.

### EXAMPLE 2

The pelletizing, molding and measuring were conducted in the same manner as described in Example 1, except for changing the amount of the brominated bisphenol type epoxy resin of Example 1 to 11.5 wt% and the amount of antimony trioxide of Example 1 to 0.5 wt% (Br/Sb = 20/1). The results obtained are shown in Table 1.

### EXAMPLE 3

The pelletizing, molding and measuring were conducted in the same manner as described in Example 1, except for changing the amount of the brominated bisphenol type epoxy resin of Example 1 to 11.6 wt% and the amount of antimony trioxide of Example 1 to 0.4 wt% (Br/Sb = 30/1). The results obtained are shown in Table 1.

### EXAMPLE 4

The pelletizing, molding and measuring were conducted in the same manner as described in Example 1, except for changing the amount of the polystyrene resin of Example 1 to 10 wt%. The results obtained are shown in Table 1.

### EXAMPLE 5

The pelletizing, molding and measuring were conducted in the same manner as described in Example 1, except for changing the amount of the glass fiber of Example 1 to 15 wt%, the amount of the heavy calcium carbonate of Example 1 to 18 wt%, the amount of mica of Example 1 to 7 wt% and the amount of the polystyrene resin of Example 1 to 0 wt%. The results obtained are shown in Table 1.

### EXAMPLE 6

The pelletizing, molding and measuring were conducted in the same manner as described in Example 1, except for changing the mica of Example 1 to talc (Microace K-1, a product of Nippon Talc Co., Ltd.) and the amount of the polystyrene resin of Example 1 to 0 wt%. The results obtained are shown in Table 1.

### EXAMPLE 7

The pelletizing, molding and measuring were conducted in the same manner as described in Example 1, except for adding 5 wt% of a polystyrene resin to the composition of Example 6. The results obtained are shown in Table 1.

### EXAMPLE 8

The pelletizing, molding and measuring were conducted in the same manner as described in Example 1, except for changing polyethylene terephthalate (A1) of Example 1 to a mixture (a weight ratio of 5:1) (A2) of the polyethylene terephthalate and a polyethylene terephthalate which was 5% block copolymerized with an ethylene oxide addition polymer of bisphenol A (the weight ratio of bisphenol A and ethylene oxide was 1:17; average molecular weight: 1,000). The results obtained are shown in Table 1.

### EXAMPLE 9

The pelletizing, molding and measuring were conducted in the same manner as described in Example 1, except for changing the polystyrene of Example 1 to a polycarbonate (Panlite L-1250, a product of Teijin Kasei Co., Ltd.; viscosity average molecular weight = 25,000). The results obtained are shown in Table 1.

### EXAMPLE 10

The pelletizing, molding and measuring were conducted in the same manner as described in Example 1, except for changing the polystyrene of Example 1 to an ABS resin (Kaneka MUH E-1500, a product of Kaneka Corp.). The results obtained are shown in Table 1.

### COMPARATIVE EXAMPLE 1

The pelletizing, molding and measuring were conducted in the same manner as described in Example 4, except for using no antimony trioxide. The results obtained are shown in Table 1.

### COMPARATIVE EXAMPLE 2

The pelletizing, molding and measuring were conducted in the same manner as described in Example 4, except for using no brominated bisphenol-type epoxy resin. The results obtained are shown in Table 1.

### COMPARATIVE EXAMPLE 3

The pelletizing, molding and measuring were conducted in the same manner as described in Example 4, except for changing the amount of the glass fiber from 16 wt% to 15 wt%, using no calcium carbonate, and changing the amount of mica from 5 wt% to 25 wt%. The results obtained are shown in Table 1.

### COMPARATIVE EXAMPLE 4

The pelletizing, molding and measuring were conducted in the same manner as described in Example 5, except for changing the amount of calcium carbonate from 18 wt% to 25 wt% and using no mica. The results obtained are shown in Table 1.

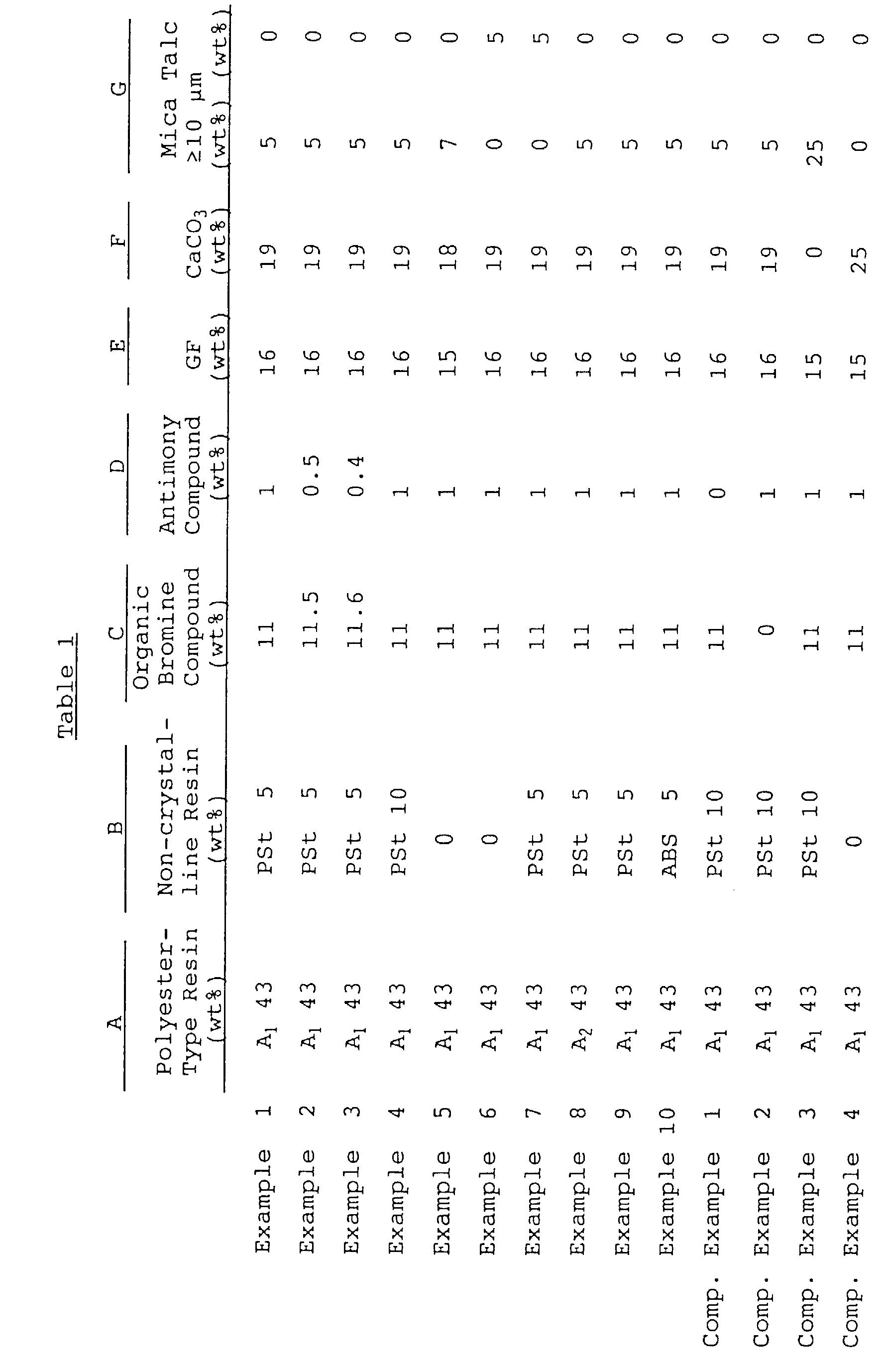

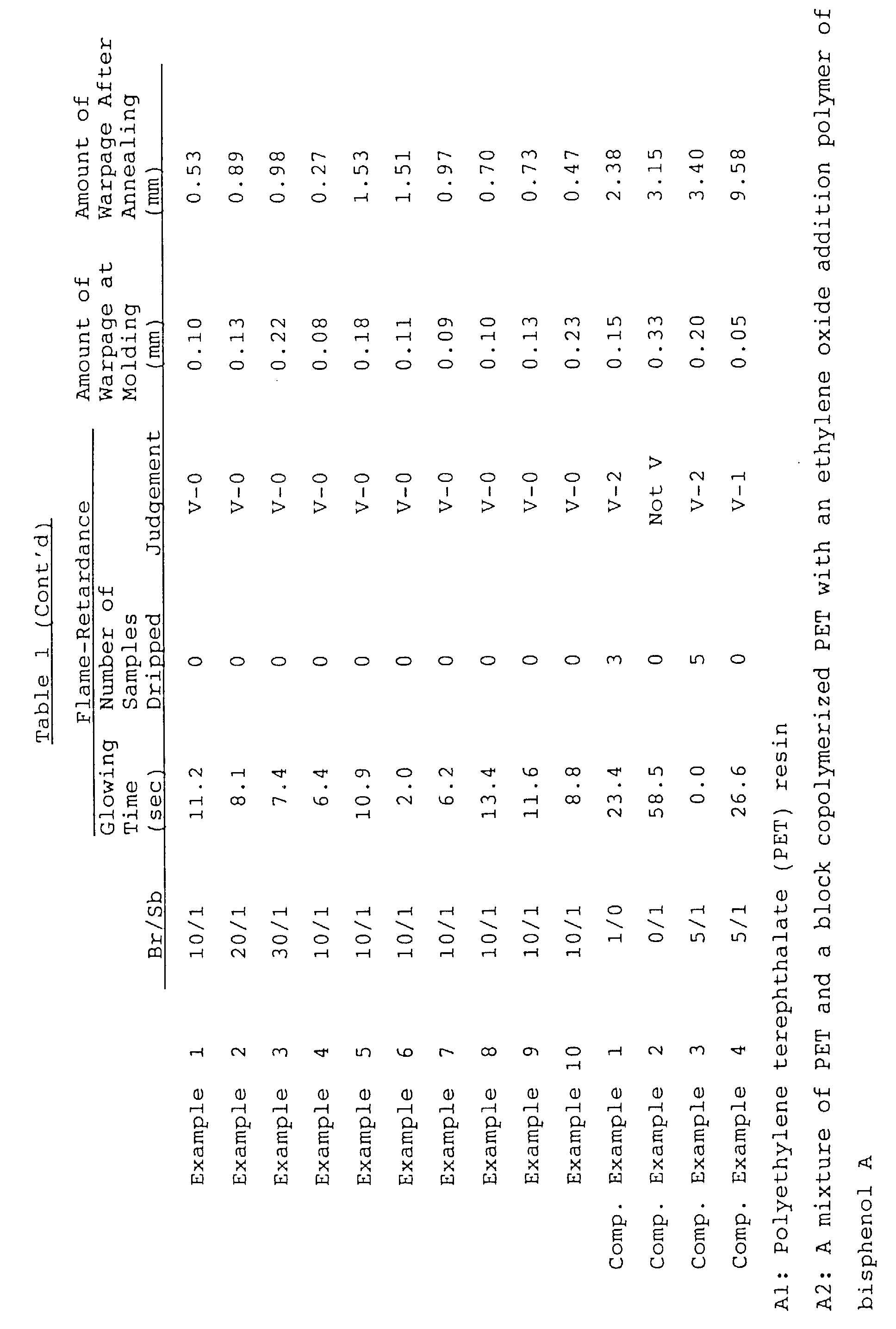

As is apparent from Table 1, in the resin compositions obtained in the Examples, the glowing time thereof is shortened and, at the same time, dripping at the time of burning is suppressed and a very high flame-retardance is obtained. Further, the amount of warpage at the time of molding as well as the amount of warpage after the annealing treatment are decreased.

On the other hand, the resin compositions obtained in the Comparative Examples have a low degree of warpage at the time of molding which is substantially the same level of warpage as in the Exanples, whereas the amount of warpage after the annealing markedly deteriorates. Further, in the burning test, the flame-retardance is markedly reduced due to the generation of dripping and the glowing.

The flame-retardant polyester-type resin composition of the present invention has excellent warpage properties, and, in particular, it maintains low warpage even after the annealing treatment, and also has a markedly improved flame-retardance. Further, it provides molded articles having good dimensional stability, electric properties, lubricating properties, plasticity, coloring properties, mechanical characteristics, heat-stability, thermal resistance, and anti-chemical properties.

## Claims

1. A flame-retardant polyester-type resin composition comprising from 20 to 85 wt% of a polyester-type resin (A), from 0 to 20 wt% of a non-crystalline resin (B) which is incompatible with the polyester-type resin (A), from 1 to 30 wt% of an organic bromine-type compound (C), from 0.1 to 10 wt% of an antimony compound (D), from 3 to 40 wt% of a reinforcing fiber (E), from 1 to 40 wt% of calcium carbonate (F), and from 1 to 20 wt% of an inorganic filler comprising mica and/or talc (G).

2. A composition as claimed in claim 1, wherein the molar ratio (Br/Sb) of bromine atoms in the organic bromine-type compound (C) and of antimony atoms in the antimony compound (D) is from 1/1 to 50/1.

3. A composition as claimed in claim 1 or 2, wherein the non-crystalline resin (B) which is incompatible with the polyester-type resin is at least one resin selected from a polystyrene, a polycarbonate, a polyphenylene oxide, an AS resin, an ABS resin, an AAS resin, an AES resin, a methacrylic resin and a phenylmaleimide resin.

4. A composition as claimed in any of claims 1 to 3, wherein the weight average flake diameter (value determined by averaging the weight distribution of flake diameters) of the mica used as on inorganic filler (G)is from 10 to 350 µm.

5. A composition as claimed in any of claims 1 to 4, wherein said polyester-type resin (A) comprises polyethylene terephthalate and a block copolymer represented by the following general formula (I): 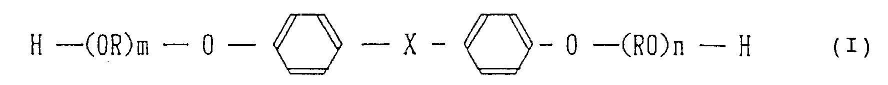 wherein X represents a -C(CH₃)₂- group, a -SO₂- group, a -CO- group or a -O- group; R represents an alkylene group having 3 carbon atoms or less, and n and m each is an integer of from 5 to 15.

## Patentansprüche

1. Flammverzögernde Harzmasse vom Polyestertyp, umfassend 20 bis 85 Gew.-% eines Harzes vom Polyestertyp (A), 0 bis 20 Gew.-% eines nicht kristallinen Harzes (B), das mit dem Harz vom Polyestertyp (A) nicht verträglich ist, 1 bis 30 Gew.-% einer organischen Verbindung vom Bromtyp (C), 0.1 bis 10 Gew.-% einer Antimonverbindung (D), 3 bis 40 Gew.-% einer verstärkenden Faser (E), 1 bis 40 Gew.-% Calciumcarbonat (F) und 1 bis 20 Gew.-% eines Glimmer und/oder Talkum umfassenden anorganischen Füllstoffs (G).

2. Masse nach Anspruch 1, in der das Molverhältnis (Br/Sb) von Bromatomen in der organischen Verbindung vom Bromtyp (C) und der Antimonatome in der Anti-monverbindung (D) 1/1 bis 50/1 beträgt.

3. Masse nach Anspruch 1 oder 2, in der das nicht kristalline Harz (B), das mit dem Harz vom Polyestertyp nicht verträglich ist, mindestens ein Harz ist, ausgewählt aus einem Polystyrol, einem Polycarbonat, einem Polyphenylenoxid, einem AS-Harz, einem ABS-Harz, einem AAS-Harz, einem AES-Harz, einem Methacrylharz und einem Phenylmaleinimidharz.

4. Masse nach einem der Ansprüche 1 bis 3, in der das Gewichtsmittel des Plättchendurchmessers (durch Mittelwertbildung der Gewichtsverteilung des Plättchendurchmessers bestimmter Wert) des als anorganischen Füllstoffs (G) verwendeten Glimmers 10 bis 350 µm beträgt.

5. Masse nach einem der Ansprüche 1 bis 4, in der das Harz vom Polyestertyp (A) Polyethylenterephthalat und ein Blockcopolymer der folgenden allgemeinen Formel (I) umfaßt: 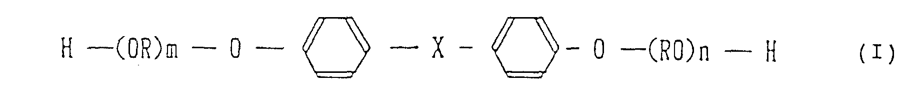 in der X eine Gruppe -C(CH₃)₂-, -SO₂-, -CO- oder -O- darstellt; R einen Alkylenrest mit 3 Kohlenstoffatomen oder weniger darstellt und n und m jeweils eine ganze Zahl von 5 bis 15 ist.

## Revendications

1. Composition de résine de type polyester retardatrice d'inflammation comprenant de 20 à 85 % en poids d'une résine de type polyester (A), de 0 à 20 % en poids d'une résine non cristalline (B) qui est incompatible avec la résine de type polyester (A), de 1 à 30 % en poids d'un composé organique de type brome (C), de 0,1 à 10 % en poids d'un composé d'antimoine (D), de 3 à 40 % en poids d'une fibre de renforcement (E), de 1 à 40 % en poids de carbonate de calcium (F), et de 1 à 20 % en poids d'une charge inorganique comprenant du mica et/ou de la stéatite (G).

2. Composition selon la revendication 1, dans laquelle le rapport molaire (Br/Sb) des atomes de brome dans le composé organique de type brome (C) et des atomes d'antimoine dans le composé d'antimoine (D) est compris entre 1/1 et 50/1.

3. Composition selon la revendication 1 ou 2, dans laquelle la résine non cristalline (B) qui est incompatible avec la résine de type polyester est au moins une résine choisie parmi un polystyrène, un polycarbonate, un poly(oxyde de phénylène), une résine AS, une résine ABS, une résine AAS, une résine AES, une résine méthacrylique et une résine de phénylmaléimide.

4. Composition selon l'une quelconque des revendications 1 à 3, dans laquelle le diamètre moyen de flocons en poids (valeur déterminée en moyennant la distribution massique des diamètres de flocons) du mica utilisé comme charge inorganique (G) est compris entre 10 et 350 µm.

5. Composition selon l'une quelconque des revendications 1 à 4, dans laquelle ladite résine de type polyester (A) comprend du poly(éthylènetéréphtalate) et un copolymère séquencé représenté par la formule générale (1) suivante : 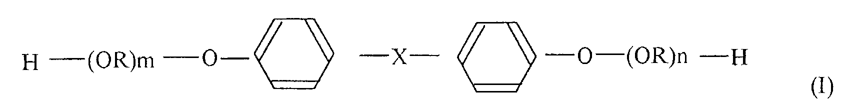 dans laquelle X représente un groupe -C(CH₃)₂-, un groupe -SO₂-, un groupe -CO- ou un groupe -O- ; R représente un groupe alkylène ayant 3 atomes de carbone ou moins, et n et m représentent chacun un nombre entier de 5 à 15.
